(19) Europäisches Patentamt
European Patent Office
Office européen des brevets

(11) Veröffentlichungsnummer: **0 294 330 B1**

(12) **EUROPÄISCHE PATENTSCHRIFT**

(45) Veröffentlichungstag der Patentschrift: **12.01.94**

(51) Int. Cl.⁵: **C09B 44/02**, D06P 1/41, D21H 21/28

(21) Anmeldenummer: **88810338.9**

(22) Anmeldetag: **25.05.88**

(54) **Kationische Disazofarbstoffe.**

(30) Priorität: **03.06.87 CH 2095/87**

(43) Veröffentlichungstag der Anmeldung:
**07.12.88 Patentblatt 88/49**

(45) Bekanntmachung des Hinweises auf die Patenterteilung:
**12.01.94 Patentblatt 94/02**

(84) Benannte Vertragsstaaten:
**BE CH DE ES FR GB IT LI**

(56) Entgegenhaltungen:
**EP-A- 0 000 174**
**FR-A- 2 511 695**
**US-A- 4 103 092**

(73) Patentinhaber: **CIBA-GEIGY AG**
**Klybeckstrasse 141**
**CH-4002 Basel(CH)**

(72) Erfinder: **Stingelin, Willy**
**Stockackerstrasse 1A**
**CH-4153 Reinach(CH)**

**EP 0 294 330 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft neue kationische Disazofarbstoffe, Verfahren zu deren Herstellung sowie deren Verwendung als Farbstoffe, insbesondere zum Färben von Textilmaterialien und insbesondere Papier.

Aus dem Dokument US-A-4 103 092 sind bereits bestimmte kationische Disazofarbstoffe bekannt.

In dem Dokument EP-A-0 000 174 sind bestimmte Aminobenzoesäure derivate beschrieben.

Die neuen Disazofarbstoffe entsprechen der Formel

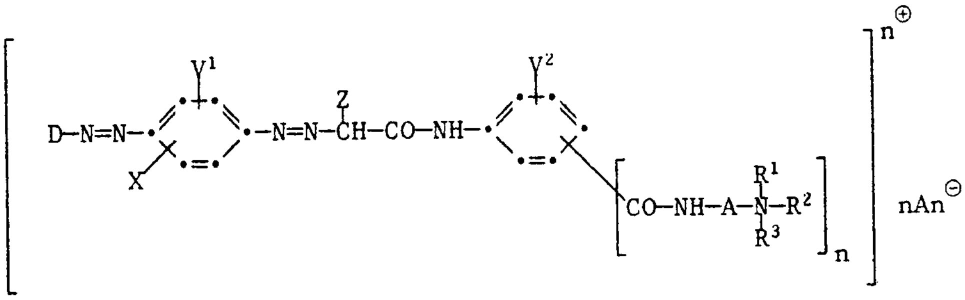 (1)

worin bedeuten:

| | |
|---|---|
| D | den Rest einer gegebenenfalls substituierten homocyclischen oder heterocyclischen Diazokomponente, |
| $V^1$ und $V^2$ | unabhängig voneinander Wasserstoff, gegebenenfalls substituiertes $C_1$-$C_4$-Alkyl oder $C_1$-$C_4$-Alkoxy, Halogen, Cyan, |
| X | Wasserstoff, gegebenenfalls substituiertes $C_1$-$C_4$-Alkyl oder -Alkoxy, Halogen, Cyan, eine Gruppe der Formel<br>-NH-CHO,<br>$-NH-CO-NH_2$,<br>-NH-CO-NH-Q oder<br>$-NH-CO-(O)_m-Q$,<br>worin m Null oder 1 und Q gegebenenfalls substituiertes $C_1$-$C_4$-Alkyl oder Phenyl bedeutet, |
| Z | $C_1$-$C_4$-Alkyl-CO-, -CN, -COO-$C_1$-$C_4$-Alkyl, $-CONH_2$, $-CO-C_6H_5$, |
| $R^1$, $R^2$ und $R^3$ | unabhängig voneinander je einen gegebenenfalls substituierten Alkylrest oder $R^1$ und $R^2$ zusammen mit dem sie verbindenden Stickstoffatom oder $R^1$, $R^2$ und $R^3$ zusammen mit dem sie verbindenden Stickstoffatom einen heterocyclischen Rest, |
| A | einen Alkylenrest mit 2 bis 6 C-Atomen, |
| n | 1 oder 2 und |
| $An^{\ominus}$ | ein Anion. |

D bildet den Rest einer aromatischen, homocyclischen oder heterocyclischen Diazokomponente.

Dieser kann z.B. Thienyl, Thiazolyl, Isothiazolyl, 1,2,4-Thiadiazolyl, 1,3,4-Thiadiazolyl, Benzthiazolyl, Benzisothiazolyl, Pyrazolyl, Imidazolyl, 1,2,3-Triazolyl, 1,2,4-Triazolyl, Pyridyl oder Phenyl bedeuten. Jedes dieser Systeme kann weitere Substituenten tragen wie Alkyl oder Alkoxy mit je 1 bis 4 Kohlenstoffatomen, Halogen, besonders Chlor oder Brom, Trifluormethyl, Cyano, Nitro, Acyl, Benzoyl, Carboalkoxy, besonders Carbomethoxy oder Carboethoxy, Alkylsulfon mit 1 bis 4 Kohlenstoffatomen, Phenylsulfon, Sulfonamid oder Arylazo, insbesondere Phenylazo oder den Rest

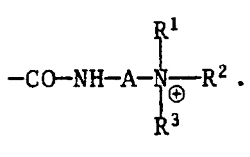

Je 2 benachbarte Substituenten der genannnten Ringsysteme können auch zusammen weitere ankondensierte Ringe bilden, z.B. Phenylringe oder cyclische Imide.

Vorzugsweise bedeutet D einen Benzthiazolyl-, Pyridyl- oder Phenylrest, welcher unsubstituiert oder ein- oder zweimal durch einen der obengenannten Reste substituiert ist.

Die bevorzugte Bedeutung von D ist Phenyl, welches maximal mit 4, gegebenenfalls verschiedenen Substituenten aus der oben genannten Aufzählung substituiert ist. Von den aufgezählten Substituenten sind $C_1$-$C_4$-Alkyl oder -Alkoxy, Chlor oder eine Gruppe der Formel

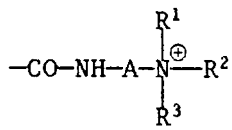

bevorzugt.

Unter Alkylgruppen sind erfindungsgemäss generell geradkettige oder verzweigte Alkylgruppen zu verstehen. Es handelt sich z.B. um Methyl, Ethyl, Propyl i-Propyl, Butyl, i-Butyl, tert.-Butyl, Amyl, tert.-Amyl (1,1-Dimethylpropyl), 1,1,3,3-Tetramethylbutyl, Hexyl, 1-Methylpentyl, Neopentyl, 1-, 2- oder 3-Methylhexyl, Heptyl, n-Octyl, tert. Octyl, 2-Ethylhexyl, n-Nonyl, Isononyl, Decyl, Dodecyl, Cyclopentyl, Cyclohexyl, Methylcyclohexyl sowie die dazugehörenden Isomeren.

Diese Alkylreste können substituiert sein, z.B. durch Hydroxy, Alkoxy, mit 1 bis 4 Kohlenstoffatomen, insbesondere Methoxy, Cyano oder Phenyl. Als weitere Substituenten sind geeignet Halogen, wie Fluor, Chlor oder Brom, oder -CO-U, worin U Alkyl mit 1 bis 6 Kohlenstoffatomen oder Phenyl ist.

Geeignete Alkoxyreste sind z.B. Methoxy, Ethoxy, Propoxy, iso-Propoxy, n-Butoxy, i-Butoxy oder tert.-Butoxy.

Beispiele für geeignete substituierte Alkylreste sind: Methoxymethyl, Ethoxymethyl, Ethoxyethyl, Ethoxypropyl, n-Propoxymethyl, iso-Propoxymethyl, Butoxymethyl, Butoxyethyl, Butoxypropyl, Ethoxypentyl, Methoxybutyl, Ethoxypentyl, 2-Hydroxyethoxypentyl, Cyanethyl, Hydroxyethyl.

A bedeutet einen Alkylenrest mit 2 bis 6 C-Atomen, vorzugsweise einen unverzweigten Rest, z.B. Ethylen, Propylen, Butylen, Pentylen oder Hexylen. Vorzugsweise bedeutet A Ethylen oder Butylen und insbesondere Propylen.

$R^1$, $R^2$ und $R^3$ stellen unabhängig voneinander je einen gegebenenfalls substituierten Alkylrest dar, beispielsweise Methyl, Ethyl, n- oder iso-Propyl, n-, sec- oder tert-Butyl, geradkettiges oder verzweigtes Pentyl oder Hexyl, Cyclopentyl oder Cyclohexyl, wobei diese Reste substituiert sein können, z.B. durch Hydroxy, Phenyl oder Alkoxy. Beispiele für solche substuierten Reste sind Hydroxymethyl, Hydroxyethyl, Methoxyethyl, Ethoxyethyl, Propoxypropyl oder Benzyl.

$R^1$ und $R^2$ können auch zusammen mit dem sie verbindenden Stickstoffatom einen heterocyclischen Rest darstellen, beispielsweise einen Pyrrolidin-, Piperidin-, Morpholin- oder Piperazinrest, oder $R^1$, $R^2$ und $R^3$ bilden zusammen mit dem sie verbindenden Stickstoffatom einen heterocyclischen Rest, z.B. einen Pyridinium- oder monoquaternierten Triethylendiaminrest.

Vorzugsweise bedeutet $R_1$ Methyl oder Hydroxyethyl und $R^2$ und $R^3$ unabhängig voneinander je $C_1$-$C_3$-Alkyl, insbesondere je Methyl.

$V^1$ und $V^2$ bedeuten unabhängig voneinander je Wasserstoff, Halogen, CN, $C_1$-$C_4$-Alkyl oder -Alkoxy, wobei die letztgenannten Gruppen z.B. durch Hydroxy, Halogen, wie Brom oder vor allem Chlor, Cyan oder $C_1$-$C_4$-Alkoxy substituiert sein können. Vorzugsweise sind $V^1$ und $V^2$ jeweils Wasserstoff, Methyl oder Methoxy, vor allem jeweils Wasserstoff.

X bedeutet Wasserstoff, $C_1$-$C_4$-Alkyl oder -Alkoxy, Halogen, wie Brom oder Chlor, Cyan oder eine Gruppe der Formel

-NH-CHO,

$-NH-CO-NH_2$,

-NH-CO-NHQ oder

$$-NH-CO-(O)_m-Q,$$

worin m Null oder 1 und Q gegebenenfalls substituiertes $C_1$-$C_4$-Alkyl oder Phenyl bedeutet. Als Substituenten für die Alkylgruppen Q kommen z.B. Halogen, wie Chlor oder Brom, oder vor allem Gruppen der Formeln

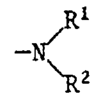

oder

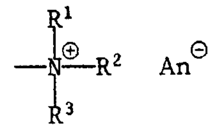

in Betracht, wobei $R^1$, $R^2$ und $R^3$ die weiter vorne angeführten Bedeutungen aufweisen und $An^{\ominus}$ ein Anion ist. Als Substituenten für die Phenylgruppe Q kommen z.B. in Frage: $C_1$-$C_4$-Alkyl oder -Alkoxy, Halogen oder Nitro.

Vorzugsweise bedeutet X Wasserstoff, Methyl, Ethyl, Methoxy, Ethoxy, Acetylamino, Propionylamino, Methoxycarbonylamino, Ethoxycarbonylamino oder eine Gruppe der Formel -NH-CHO, $-NH-CO-NH_2$,

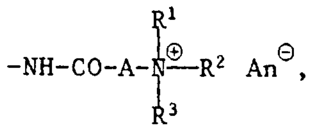,

$-NH-CO-R^2$ oder

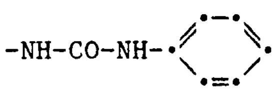,

worin

A Ethylen, Propylen, oder Butylen, $R^1$ Methyl oder Hydroxyethyl und $R^2$ und $R^3$ unabhängig voneinander je $C_1$-$C_3$-Alkyl bedeuten. Besonders bevorzugt bedeutet X Wasserstoff, Methyl oder Methoxy.

Bei dem Rest Z handelt es sich vorzugsweise um $-CO-CH_3$, -CN, $-COOC_1$-$C_2$-Alkyl, $-CO-NH_2$ oder $-CO-C_6H_5$, wobei $-CO-CH_3$ ganz besonders bevorzugt ist.

Als Anionen $An^{\ominus}$ kommen sowohl anorganische wie organische Anionen in Frage; beispielsweise sind genannt: Halogenid-, wie Chlorid-, Bromid- oder Jodid-, Sulfat-, Methylsulfat-, Bortetrafluorid-, Aminosulfonat-, Perchlorat-, Carbonat-, Bicarbonat-, Phosphat-, Phosphormolybdat-, Phosphorwolframat-, Phosphorwolframmolybdat-, Benzolsulfonat-, Naphthalinsulfonat-, 4-Chlorbenzolsulfonat-, Oxalat-, Maleinat-, Acetat-, Propionat-, Lactat-, Succinat-, Chloracetat-, Tartrat-, Methansulfonat- oder Benzoationen, oder komplexe Anionen, wie das von Chlorzinkdoppelsalzen.

Das Anion ist im allgemeinen durch das Herstellungsverfahren vorgegeben. Vorzugsweise liegen die Chloride, Hydrogensulfate, Sulfate, Methosulfate, Phosphate, Formiate, Lactate oder Acetate vor. Die Anionen können in bekannter Weise gegen andere Anionen ausgetauscht werden.

Eine bevorzugte Ausführungsform der Erfindung betrifft Azofarbstoffe der Formel (1), worin

| | |
|---|---|
| D | einen gegebenenfalls substituierten Benzthiazolyl-, Pyridyl-oder Phenylrest, |
| $V^1$ und $V^2$ | unabhängig voneinander je Wasserstoff, Methyl, Ethyl, Methoxy oder Ethoxy, |
| X | Wasserstoff, Methyl, Ethyl, Methoxy oder Ethoxy, |
| Z | $-CO-CH_3$, |
| $R^1$ | Methyl oder Hydroxyethyl, |
| $R^2$ und $R^3$ | unabhängig voneinanderje $C_1$-$C_3$-Alkyl, |
| A | Ethylen, Propylen oder Butylen, |
| n | 1 oder 2 und |
| $An^{\ominus}$ | ein Anion bedeutet. |

Unter diesen sind die Disazofarbstoffe der Formel

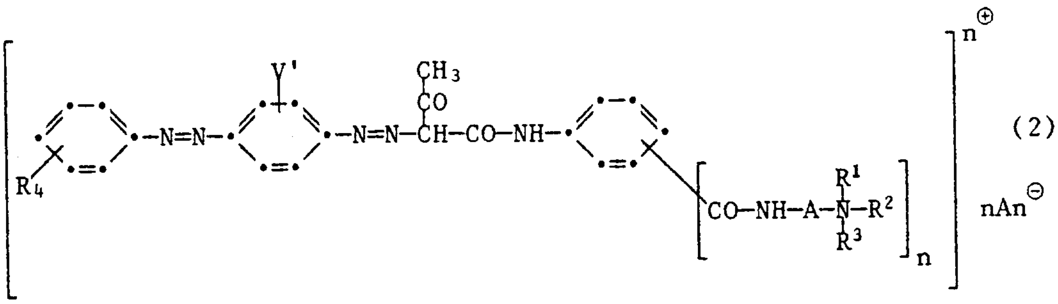

(2)

worin

| | |
|---|---|
| $R^4$ | Wasserstoff, Chlor, $C_1$-$C_4$-Alkyl, $C_1$-$C_4$-Alkoxy oder eine Gruppe der Formel |

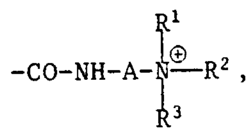

| | |
|---|---|
| $R^1$ | Methyl oder Hydroxyethyl, |
| $R^2$ und $R^3$ | unabhängig voneinander je $C_1$-$C_3$-Alkyl, |
| A | Ethylen oder Propylen, |
| V' | Wasserstoff, Methyl oder Methoxy, |
| n | 1 oder 2 und |
| $An^{\ominus}$ | ein Anion bedeutet, besonders bevorzugt. |

Die Herstellung der Disazofarbstoffe der Formel (1) erfolgt in an sich bekannter Art und Weise, beispielsweise indem man ein Amin der Formel

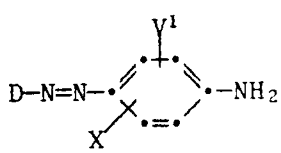

(3)

diazotiert und mit einer Verbindung der Formel

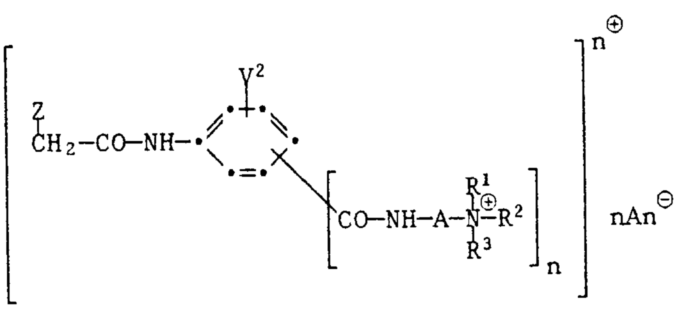

(4)

kuppelt, wobei für D, X, $V^1$, Z, $V^2$, A, $R^1$, $R^2$, $R^3$, n und An die zuvor angegebenen Bedeutungen und Bevorzugungen gelten.

Die Verbindungen der Formel (4), ihre Herstellung und ihre Verwendung als Kupplungskomponenten zur Herstellung von Azofarbstoffen sind ebenfalls Gegenstand der Erfindung. Sie werden in an sich bekannter Weise hergestellt durch Umsetzung der Amine der Formel

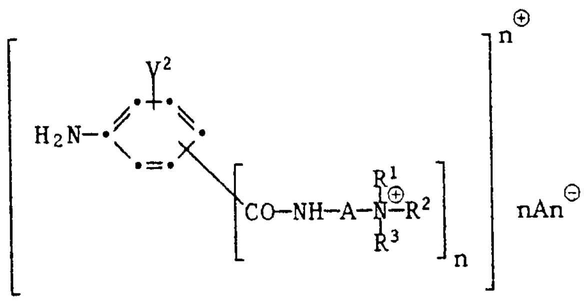

(5)

in an sich bekannter Weise mit einem Acylierungsmittel, welches den Rest Z-$CH_2$-CO- einführt.
Geeignet Acylierungsmittel sind z.B.:
Diketen, Acetessigsäuremethylester, Acetessigsäureethylester, Cyanessigsäureethylester, Cyanessigsäuremethylester, Malonsäuredimethylester, Malonsäurediethylester, Malonsäuremonomethylesteramid, Malonsäuremonomethylesteriminoester und Benzoylessigsäuremethylester. Die Umsetzung erfolgt z.B. in wässriger Lösung bei einer Temperatur zwischen 0 und 80 °C, vorzugsweise zwischen 10 und 50 °C und in Gegenwart einer Base, wie z.B. Natrium- oder Kaliumcarbonat oder -bicarbonat.

Die Verbindungen der Formel (5) sind bekannt, z.B. aus der DE-A-2,915,323.

Die Amine der Formel (3) sind bekannt oder können auf bekannte Art und Weise erhalten werden.

Die Diazotierung der Amine der Formel (3) erfolgt in an sich bekannter Weise, etwa mit Natriumnitrit in saurem, z.B. salzsaurem oder schwefelsaurem, wässrigem Medium. Die Diazotierung kann aber auch mit anderen Diazotierungsmitteln, z.B. mit Nitrosylschwefelsäure ausgeführt werden. Dabei kann eine zusätzliche Säure im Reaktionsmedium anwesend sein, z.B. Phosphorsäure, Schwefelsäure, Essigsäure, Salzsäure oder Mischungen dieser Säuren, z.B. Mischungen aus Phosphorsäure und Essigsäure. Zweckmässig wird die Diazotierung bei Temperaturen von -10 bis 30 °C, z.B. von -10 °C bis Raumtemperatur, durchgeführt.

Die Kupplung der diazotierten Verbindung der Formel (3) auf die Kupplungskomponente der Formel (4) erfolgt ebenfalls in bekannter Weise, beispielsweise in saurem, wässrigem oder wässrig-organischem Medium, vorteilhaft bei Temperaturen von -10 bis 30 °C, insbesondere unter 10 °C. Als Säuren verwendet man z.B. Salzsäure, Essigsäure, Schwefelsäure oder Phosphorsäure. Diazotierung und Kupplung können beispielsweise im Eintopfverfahren, also im gleichen Reaktionsmedium, durchgeführt werden.

Die Azoverbindungen der Formel (1) werden sowohl als Pulver-bzw. Granulat-Präparationen als auch in Form von konzentrierten Lösungen zum Einsatz gebracht. Pulver-Präparationen werden in üblicher Weise mit Stellmaterialien wie Natriumsulfat, -phosphat, -chlorid-, -acetat in Gegenwart von Entstaubungsmitteln eingestellt, oder die Azoverbindungen werden direkt als Sprühtrocknungspräparationen in den Handel gebracht. Konzentrierte Farbstofflösungen können wässriger oder wässrig/organischer Art sein, wobei übliche und möglichst gut abbaubare Zusätze bevorzugt werden wie organische Säuren, vorzugsweise Essigsäure, Ameisensäure, Milchsäure, Zitronensäure, Amide wie Formamid, Dimethylformamid, Harnstoff, Alkohole wie Glykol, Diglykol, Diglykolether, vorzugsweise Methyl- oder Ethylether.

Verwendung finden die Azoverbindungen der Formel (1) vor allem als Farbstoffe zum Färben und Bedrucken von Textilmaterialien, Papier, Leder und zur Bereitung von Tinten. Als Textilmaterialien kommen natürliche und synthetische kationisch anfärbbare Materialien in Frage. Bevorzugt werden die neuen Azoverbindungen zum Färben und Bedrucken von Papier, Halbkartons und Kartons in der Masse und in der Oberfläche, sowie von Textilmaterialien, die z.B. vorteilhaft aus Homo- oder Mischpolymerisaten des Acrylnitrils bestehen oder aus synthetischen Polyamiden oder Polyestern, welche durch saure Gruppen modifiziert sind, eingesetzt. Man färbt diese Textilmaterialien vorzugsweise in wässrigem, neutralem oder saurem Medium nach dem Ausziehverfahren, gegebenenfalls unter Druck oder nach dem Kontinueverfahren. Das Textilmaterial kann dabei in verschiedenartigster Form vorliegen, beispielsweise als Faser, Faden, Gewebe, Gewirke, Stückware und Fertigware, wie Hemden oder Pullover.

Mit den erfindungsgemässen Farbstoffen lassen sich egale Färbungen bzw. Drucke herstellen, die sich durch sehr gute Allgemeinechtheiten vor allem einen sehr hohen Ausziehgrad und gute Wasserechtheiten auszeichnen.

Ausserdem können die neuen Azoverbindungen der Formel (1) auch zum Färben und Bedrucken von natürlichen und regenerierten Cellulosematerialien, vor allem von Baumwolle und Viscose verwendet werden, wobei man ebenfalls farbstarke Ausfärbungen erhält.

Die neuen Azoverbindungen der Formel (1) haben auf diesen Textilmaterialien ein gutes Ziehvermögen, einen guten Ausziehgrad und die erhaltenen Färbungen weisen sehr gute Echtheiten, vor allem Nassechtheiten auf.

Eine bevorzugte Verwendung der neuen Azoverbindungen der Formel (1) liegt in der Anwendung zum Färben von Papier aller Arten, vor allem von gebleichtem ungeleimtem und geleimtem ligninfreiem Papier, wobei von gebleichtem oder ungebleichtem Zellstoff ausgegangen werden kann und Laub- oder Nadelholz-Zellstoff, wie Birken- und/oder Kiefernsulfit und/oder Sulfat-Zellstoff verwendet werden kann. Ganz besonders geeignet sind diese Verbindungen zum Färben von ungeleimtem Papier (z.B. Servietten, Tischdecken, hygienischen Papieren) als Folge ihrer sehr hohen Affinität zu diesem Substrat.

Die neuen Azoverbindungen der Formel (1) ziehen auf diese Substrate sehr gut auf, wobei die Abwässer praktisch farblos bleiben.

Man erhält Färbungen in gelben Nuancen.

Die erhaltenen Färbungen zeichnen sich durch gute Allgemeinechtheiten aus, wie eine gute Lichtechtheit bei gleichzeitig hoher Klarheit und Farbstärke und Nassechtheit, d.h. sie zeigen keine Neigung zum Ausbluten, wenn gefärbtes Papier in nassem Zustand mit feuchtem weissem Papier in Berührung gebracht wird. Darüber hinaus weisen sie eine gute Alaun-, Säure- und Alkali-Echtheit auf. Die Nassechtheit bezieht sich nicht nur auf Wasser, sondern auch auf Milch, Fruchtsäfte und gesüsstes Mineralwasser; wegen ihrer guten Alkoholechtheit sind sie auch gegen alkoholische Getränke beständig. Diese Eigenschaft ist z.B. besonder für Servietten und Tischdecken erwünscht, bei denen vorhersehbar ist, dass das gefärbte Papier in nassem Zustand (z.B. getränkt mit Wasser, Alkohol, Tensid-Lösung etc.) in Berührung mit anderen Flächen wie Textilien, Papier und dergleichen kommt, die gegen Verschmutzung geschützt werden müssen.

Die hohe Affinität für Papier und die grosse Ausziehgeschwindigkeit der neuen Farbstoffe ist für das Kontinue-Färben von Papier von grossem Vorteil.

Die folgenden Beispiele veranschaulichen die Erfindung. Teile sind - sofern nichts anderes angegeben -Gewichtsteile und die Temperaturen sind in Grad Celsius angegeben.

Die Abkürzung RKN stellt eine Qualitätsbezeichnung dar und gibt den Reinheitsgrad der Cellulose an; die Abkürzung SR (Schopper-Riegler) gibt den Mahlgrad an.

Beispiel 1: 87 Teile 4-Amino-3'(N,N,N-trimethylaminopropyl)-benzamidmethosulfat werden in 250 Teilen Wasser gelöst und mit 2n Schwefelsäure auf pH 3 gestellt. Dann werden 23 Teile Diketen innerhab 30 Min. zugetropft, wobei ein pH-Wert 3 durch Zugabe von 10 Teilen 10%-iger Sodalösung gehalten wird. Es werden 102 Teile der Verbindung folgender Struktur erhalten:

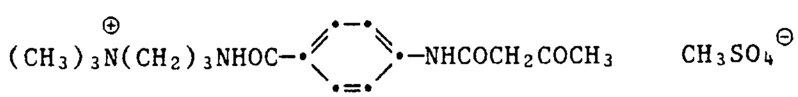

Die Lösung kann direkt zur Herstellung von Azofarbstoffen eingesetzt werden. Durch Eindampfen der Lösung auf etwa die Hälfte des Volumens und Versetzen mit abs. Ethanol lässt sich die Verbindung der vorstehenden Struktur praktisch vollständig ausfällen.

Beispiele 2-14: Nach der im Beispiel 1 beschriebenen Arbeitsweise lassen sich aus den entsprechenden 4-Aminobenzamiden durch Umsetzung mit Diketen die in der folgenden Tabelle aufgeführten Kupplungskomponenten herstellen.

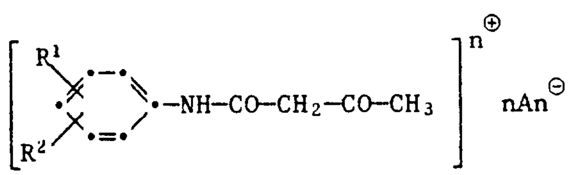

| Bsp. | $R^1$ | $R^2$ | n |
|---|---|---|---|
| 2 | $4-(CH_3)_3\overset{\oplus}{N}(CH_2)_3NHCO-$ | H | 1 |
| 3 | $3-(CH_3)_3\overset{\oplus}{N}(CH_2)_3NHCO-$ | H | 1 |
| 4 | $3-(CH_3)_3\overset{\oplus}{N}(CH_2)_3NHCO-$ | $5-(CH_3)_3\overset{\oplus}{N}(CH_2)_3NHCO-$ | 2 |
| 5 | $2-(CH_3)_3\overset{\oplus}{N}(CH_2)_3NHCO-$ | $5-(CH_3)_3\overset{\oplus}{N}(CH_2)_3NHCO-$ | 2 |
| 6 | $4-(C_2H_5)_2\underset{CH_3}{\overset{\oplus}{N}}(CH_2)_3NHCO-$ | H | 1 |
| 7 | $4-(CH_3)_3\overset{\oplus}{N}(CH_2)_2NHCO-$ | H | 1 |
| 8 | $3-(CH_3)_3\overset{\oplus}{N}(CH_2)_2NHCO-$ | H | 1 |
| 9 | $3-(CH_3)_3\overset{\oplus}{N}(CH_2)_2NHCO-$ | $5-(CH_3)_3\overset{\oplus}{N}(CH_2)_2NHCO-$ | 2 |
| 10 | $2-(CH_3)_3\overset{\oplus}{N}(CH_2)_2NHCO-$ | $5-(CH_3)_3\overset{\oplus}{N}(CH_2)_2NHCO-$ | 2 |
| 11 | $4-(C_2H_5)_3\overset{\oplus}{N}(CH_2)_2NHCO-$ | H | 1 |
| 12 | $3-(C_2H_5)_3\overset{\oplus}{N}(CH_2)_2NHCO-$ | H | 1 |
| 13 | $3-(C_2H_5)_3\overset{\oplus}{N}(CH_2)_2NHCO-$ | $5-(C_2H_5)_3\overset{\oplus}{N}(CH_2)_2NHCO-$ | 2 |
| 14 | $2-(C_2H_5)_3\overset{\oplus}{N}(CH_2)_2NHCO-$ | $5-(C_2H_5)_3\overset{\oplus}{N}(CH_2)_2NHCO-$ | 2 |

Beispiel 15: 2 Teile 4-Aminoazobenzol werden in 50 Teilen Wasser und 3 Vol. Teilen 30%-iger Salzsäure verrührt und bei 0-5° mit 2,5 Teilen 4n Natriumnitritlösung diazotiert. Die erhaltene Lösung der Diazokomponente wird direkt zu 18 Teilen der gemäss Beispiel 1 erhaltenen Lösung, welche 4,3 Teile der Kupplungskomponente enthält, gegeben und bei pH 4-5,5 und 0-5° gekuppelt. Der ausgefallene Farbstoff wird abgesaugt. Er entspricht der Formel

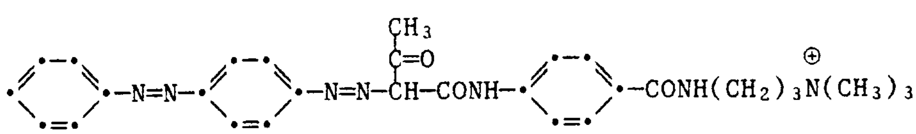

$An^{\ominus}$

($An^{\ominus}$: Mischungen $Cl^{\ominus}$ und $CH_3SO_4^{\ominus}$)
Er färbt Papier in brillanten gelben Tönen mit hoher Lichtechtheit.

Beispiel 16: Setzt man als Diazokomponente 4-Amino-2,2'-dimethylazobenzol ein und arbeitet im übrigen wie im Beispiel 15 beschrieben, so erhält man eine Lösung des Farbstoffs, der mit $ZnCl_2$ ausgefällt wird und der Formel

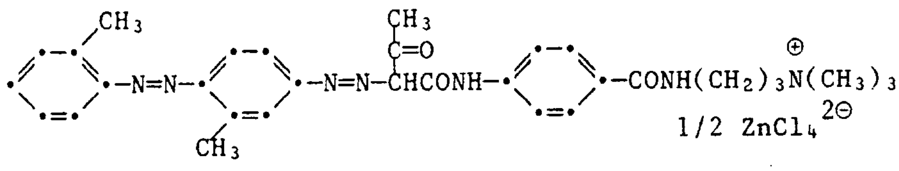

entspricht und Papier in gelber Nuance mit guten Echtheiten färbt.

Beispiel 17: Setzt man als Diazokomponente 4-Aminophenylazo-3'-pyridin ein und arbeitet im übrigen wie im Beispiel 16, so erhält man den Farbstoff der Formel

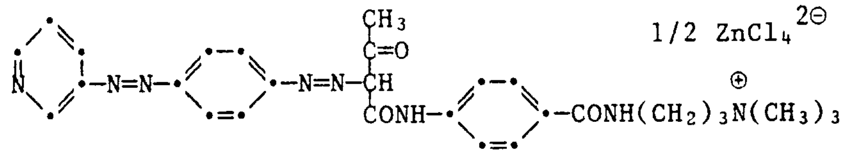

der Papier in gelben Tönen färbt.

Beispiel 18: Setzt man als Diazokomponente 4-Amino-2'-chlorazobenzol ein und arbeitet im übrigen wie im Beispiel 16, so erhält man den Farbstoff der Formel

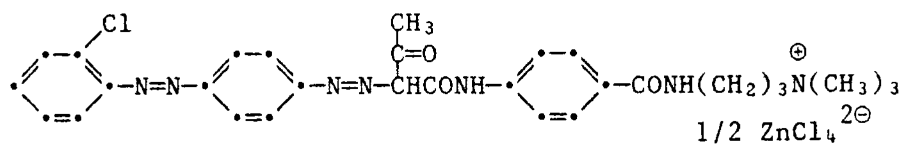

der Papier in gelben Tönen färbt.

Beispiel 19: 7 Teile 4-Amino-3'(N,N,N-trimethylaminopropyl)benzamidmethosulfat werden in 50 Teilen Wasser und 8 Vol. Teilen 30%-iger Salzsäure verrührt und bei 0-5° mit 5 ml 4n Natriumnitritlösung diazotiert. Die erhaltene Lösung wird zu 2,4 Teilen 2,5-Dimethylanilin getropft und 12 Stunden bei 0-10° verrührt. Die Temperatur des Kupplungsgemischs wird dann auf 0-5° gesenkt, 6 Vol. Teile 32%-ige Salzsäure werden zugegeben und mit 5 Teilen 4n Natriumnitritlösung diazotiert. Die erhaltene Diazolösung wird zu 36 Vol.-Teilen der gemäss Beispiel 1 erhaltenen Lösung, enthaltend 8,6 Teile der Kupplungskomponente, gegeben und bei pH 5-7 und 0-5° gekuppelt. Dann wird der Farbstoff mit $ZnCl_2$ als Zinkatchlorid ausgefällt. Der Farbstoff färbt Papiert in gelben Tönen und entspricht der Formel

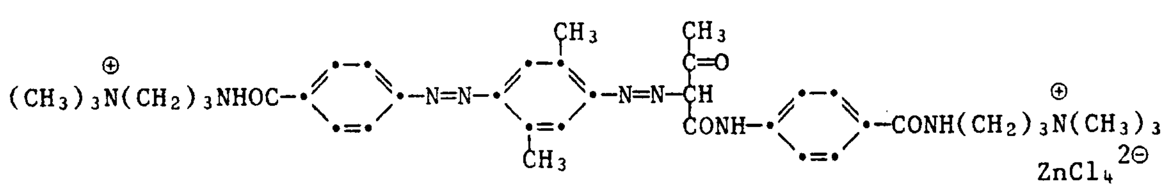

Beispiel 20: Arbeitet man analog Beispiel 15, setzt jedoch die Kupplungskomponente aus Beispiel 4 in wässriger Lösung ein und fällt den Farbstoff unter Zusatz von $NaClO_4$, so erhält man in 90%-iger Ausbeute den Farbstoff der Formel

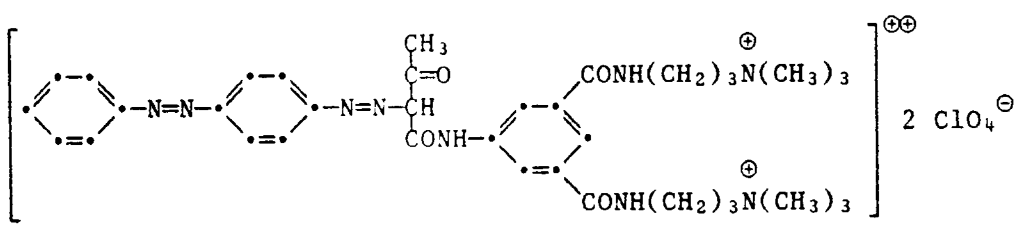

welcher Papier in gelben Nuancen mit guten Echtheiten färbt.

Beispiele 21-33:

Arbeitet man analog Beispiel 15, setzt jedoch äquivalente Mengen der in der folgenden Tabelle aufgeführten Diazo- und Kupplungskomponenten ein, so erhält man die analog aufgebauten Farbstoffe, welche Papier in grünstichig gelben Nuancen mit guten Echtheiten färben.

| Bsp. | Diazokomponente | Kupplungskomponente |
|---|---|---|
| 21 | 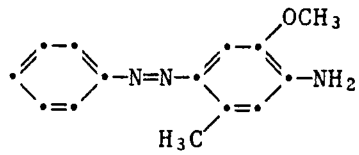 | aus Beispiel 7 |
| 22 | 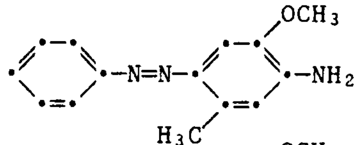 | aus Beispiel 8 |
| 23 | 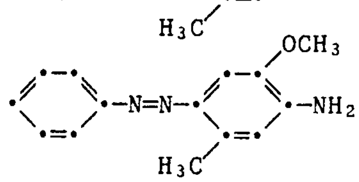 | aus Beispiel 9 |
| 24 | 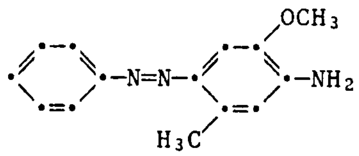 | aus Beispiel 10 |
| 25 | 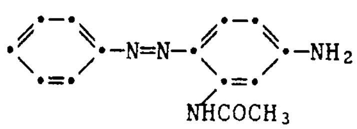 | aus Beispiel 11 |
| 26 | 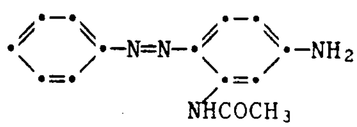 | aus Beispiel 12 |
| 27 | 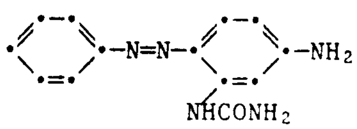 | aus Beispiel 12 |
| 28 | 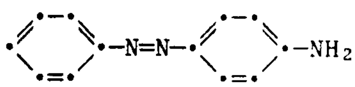 | aus Beispiel 3 |
| 29 | 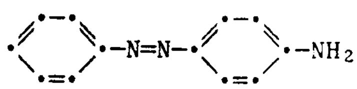 | aus Beispiel 5 |
| 30 | 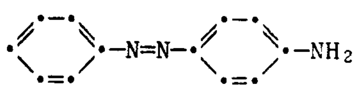 | aus Beispiel 6 |
| 31 | 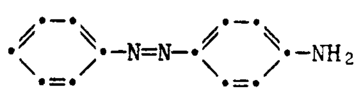 | aus Beispiel 13 |

| Bsp. | Diazokomponente | Kupplungskomponente |
|---|---|---|
| 32 | 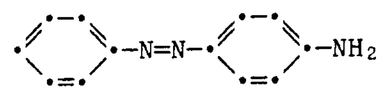 | aus Beispiel 14 |
| 33 | 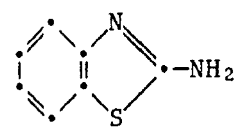 | aus Beispiel 1 |

Beispiel 34: Man vermischt 50 Teile chemisch gebleichten Buche-Sulfit-Zellstoff mit 50 Teilen gebleichter Cellulose RKN 15; (Mahlgrad 22° SR) und 2 Teilen des Farbstoffes gemäss Beispiel 1 in Wasser (pH 6, Wasserhärte 10° dH, Temperatur 20°, Flottenverhältnis 1:40). Nach 15 minütigem Rühren werden Papierblätter auf einem Frank-Blattbildner hergestellt.

Das Papier ist in einer intensiven Gelbnuance gefärbt. Das Abwasser ist praktisch völlig farblos. Der Ausziehgrad erreicht praktisch 100 %. Die Licht- und Nassechtheiten sind ausgezeichnet.

Beispiel 35: Es wird eine Papierbahn aus gebleichtem Buche-Sulfit-Zellstoff (22° SR) auf einer kontinuierlich arbeitenden Labor-Papiermaschine hergestellt. Zehn Sekunden vor dem Stoffauflauf wird eine wässrige Lösung des Farbstoffes gemäss Beispiel 1 unter starker Turbulenz dem Dünnstoff kontinuierlich zudosiert (0,5 %ige Färbung, Flottenverhältnis 1:400, Wasserhärte 10° dH, pH 6, Temperatur 20°).

Es entsteht auf der Papierbahn eine farbstarke Gelbnuance von mittlerer Intensität. Das Abwasser ist praktisch völlig farblos.

Beispiel 36: 10 Teile Baumwollgewebe (gebleichte mercerisierte Baumwolle) werden in einem Labor-Baumfärbeapparat in 200 Teilen einer Flotte (Wasserhärte 10° dH, pH 4, 3 Umwälzungen der Färbeflotte pro Minute) die 0,05 Teile des Farbstoffes gemäss Beispiel 1 enthält, gefärbt. Die Temperatur wird in 60 Minuten von 20° auf 100° erhöht, dann während 15 Minuten konstant gehalten.

Die Färbeflotte ist völlig ausgezogen. Es entsteht auf dem Baumwollgewebe eine farbstarke gelbe Färbung, welche sich durch eine gute Lichtechtheit und Nassechtheit auszeichnet.

Färbt man bei gleicher Arbeitsweise ein Textilgewebe aus Regenerat-Cellulose (Viskose), so erhält man auch auf diesem Material mit dem Farbstoff des Beispiels 1 eine farbstarke gelbe Färbung, die eine gute Lichtechtheit und Nassechtheit besitzt.

## Patentansprüche

**1.** Disazofarbstoffe der Formel

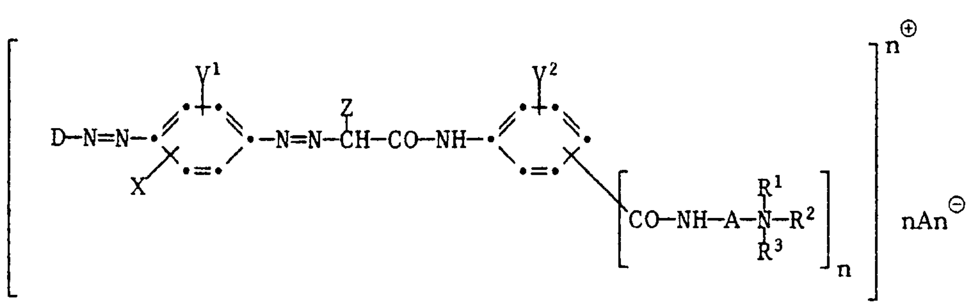

(1)

worin bedeuten:

| | |
|---|---|
| D | den Rest einer gegebenenfalls substituierten homocyclischen oder heterocyclischen Diazokomponente, |
| $V^1$ und $V^2$ | unabhängig voneinander Wasserstoff, gegebenenfalls substituiertes $C_1$-$C_4$-Alkyl oder $C_1$-$C_4$-Alkoxy, Halogen, Cyan, |
| X | Wasserstoff, gegebenenfalls substituiertes $C_1$-$C_4$-Alkyl oder -Alkoxy, Halogen, Cyan, eine Gruppe der Formel |

-NH-CHO,
$-NH-CO-NH_2$,
-NH-CO-NH-Q oder

$$-NH-CO-(O)_m-Q,$$

worin m Null oder 1 und Q gegebenenfalls substituiertes $C_1$-$C_4$-Alkyl oder Phenyl bedeutet,

| | |
|---|---|
| Z | $C_1$-$C_4$-Alkyl-CO-, -CN, -COO-$C_1$-$C_4$-Alkyl, $-CONH_2$, $-CO-C_6H_5$, |
| $R^1$, $R^2$ und $R^3$ | unabhängig voneinander je einen gegebenenfalls substituierten Alkylrest oder $R^1$ und $R^2$ zusammen mit dem sie verbindenden Stickstoffatom oder $R^1$, $R^2$ und $R^3$ zusammen mit dem sie verbindenden Stickstoffatom einen heterocyclischen Rest, |
| A | einen Alkylenrest mit 2 bis 6 C-Atomen, |
| n | 1 oder 2 und |
| $An^{\ominus}$ | ein Anion. |

**2.** Disazofarbstoffe gemäss Anspruch 1, worin D Thienyl, Thiazolyl, Isothiazolyl, 1,2,4-Thiadiazolyl, 1,3,4-Thiadiazolyl, Benzthiazolyl, Benzisothiazolyl, Pyrazolyl, Imidazolyl, 1,2,3-Triazolyl, 1,2,4-Triazolyl, Pyridyl oder Phenyl bedeutet, wobei diese Reste gegebenenfalls substituiert sind.

**3.** Disazofarbstoffe gemäss Anspruch 2, worin D Phenyl bedeutet, welches unsubstituiert ist oder substituiert durch $C_1$-$C_4$-Alkyl oder -Alkoxy, Chlor oder eine Gruppe der Formel

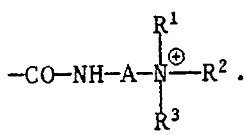

**4.** Disazofarbstoffe gemäss einem der Ansprüche 1-3, worin $R^1$, $R^2$ und $R^3$ unabhängig voneinander je Methyl, Ethyl, n- oder iso-Propyl, n-, sec- oder tert-Butyl, geradkettiges oder verzweigtes Pentyl oder Hexyl, Cyclopentyl oder Cyclohexyl darstellen, wobei diese Reste substituiert sein können, z.B. durch Hydroxy, Phenyl oder Alkoxy, oder worin $R^1$ und $R^2$ zusammen mit dem sie verbindenden Stickstoffatom einen Pyrrolidin-, Piperidin-, Morpholin- oder Piperazinrest, oder worin $R^1$, $R^2$ und $R^3$ zusammen mit dem sie verbindenden Stickstoffatom einen Pyridinium- oder monoquaternierten Triethylendiaminrest bilden.

**5.** Disazofarbstoffe gemäss Anspruch 4, worin $R_1$ Methyl oder Hydroxyethyl und $R^2$ und $R^3$ unabhängig voneinander je $C_1$-$C_3$-Alkyl, insbesondere je Methyl bedeuten.

**6.** Disazofarbstoffe gemäss einem der Ansprüche 1-5, worin $V^1$ und $V^2$ unabhängig voneinander jeweils Wasserstoff, Methyl oder Methoxy bedeuten.

**7.** Disazofarbstoffe gemäss einem der Ansprüche 1-6, worin X Wasserstoff, Methyl, Ethyl, Methoxy, Ethoxy, Acetylamino, Propionylamino, Methoxycarbonylamino, Ethoxycarbonylamino oder eine Gruppe der Formel -NH-CHO, $-NH-CO-NH_2$,

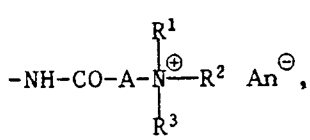

$-NH-CO-R^2$ oder

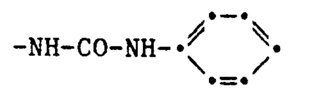 ,

darstellt, worin A Ethylen, Propylen, oder Butylen, $R^1$ Methyl oder Hydroxyethyl und $R^2$ und $R^3$ unabhängig voneinander je $C_1$-$C_3$-Alkyl bedeuten.

**8.** Disazofarbstoffe gemäss Anspruch 7, worin X Wasserstoff, Methyl oder Methoxy bedeutet.

**9.** Disazofarbstoffe gemäss einem der Ansprüche 1-8, worin Z -CN, -COO-$C_1$-$C_2$-Alkyl, -CO-$NH_2$ oder -CO-$C_6H_5$ oder vor allem -CO-$CH_3$ bedeutet.

**10.** Disazofarbstoffe gemäss Anspruch 1, worin

| | |
|---|---|
| D | einen gegebenenfalls substituierten Benzthiazolyl-, Pyridyl-oder Phenylrest, |
| $V^1$ und $V^2$ | unabhängig voneinander je Wasserstoff, Methyl, Ethyl, Methoxy oder Ethoxy, |
| X | Wasserstoff, Methyl, Ethyl, Methoxy oder Ethoxy, |
| Z | -CO-$CH_3$, |
| $R^1$ | Methyl oder Hydroxyethyl, |
| $R^2$ und $R^3$ | unabhängig voneinanderje $C_1$-$C_3$-Alkyl, |
| A | Ethylen, Propylen oder Butylen, |
| n | 1 oder 2 und |
| $An^{\ominus}$ | ein Anion bedeutet. |

**11.** Disazofarbstoffe der Formel

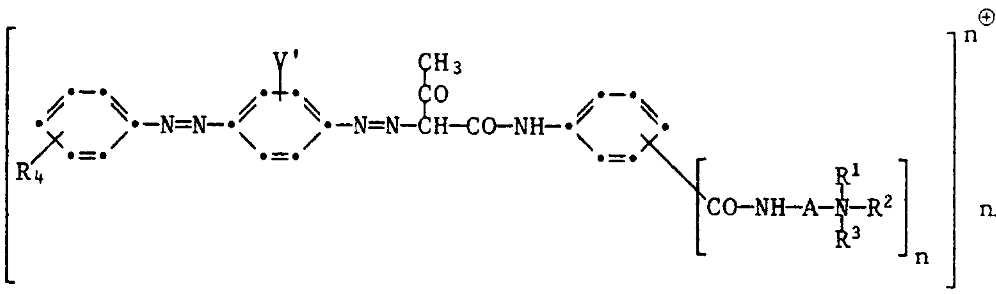

(2)

worin

| | |
|---|---|
| $R^4$ | Wasserstoff, Chlor, $C_1$-$C_4$-Alkyl, $C_1$-$C_4$-Alkoxy oder eine Gruppe der Formel |

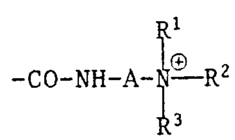 ,

| | |
|---|---|
| $R^1$ | Methyl oder Hydroxyethyl, |
| $R^2$ und $R^3$ | unabhängig voneinander je $C_1$-$C_3$-Alkyl, |
| A | Ethylen oder Propylen, |
| V' | Wasserstoff, Methyl oder Methoxy, |
| n | 1 oder 2 und |
| $An^{\ominus}$ | ein Anion bedeutet. |

**12.** Verfahren zur Herstellung von Disazofarbstoffen der Formel (1) gemäss Anspruch 1, dadurch gekennzeichnet, dass man ein Amin der Formel

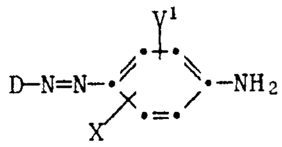

(3)

diazotiert und mit einer Verbindung der Formel

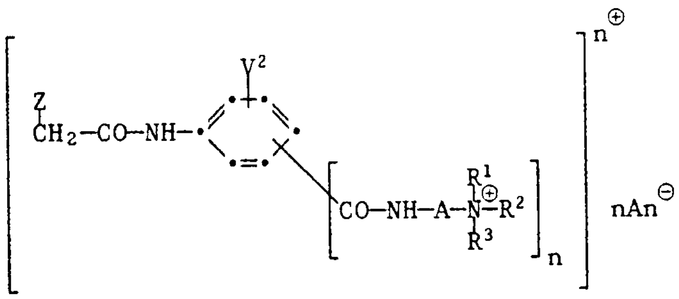

(4)

kuppelt, wobei für D, X, $V^1$, Z, $V^2$, A, $R^1$, $R^2$, $R^3$, n und An die im Anspruch 1 angegebenen Bedeutungen gelten.

**13.** Verbindungen der Formel

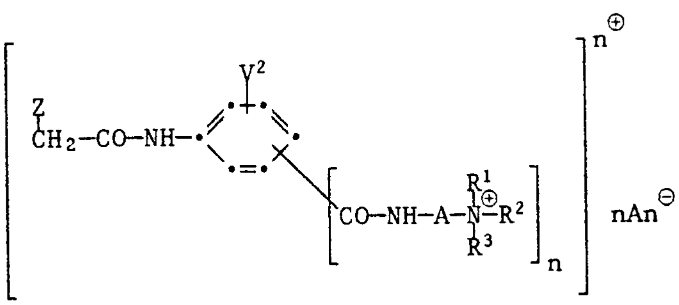

(4)

wobei Z, $V^2$, A, $R^1$, $R^2$, $R^3$, n und $An^{\ominus}$ die im Anspruch 1 angegebenen Bedeutungen aufweisen.

**14.** Verwendung der Disazoverbindungen der Formel (1) gemäss Anspruch 1 zum Färben und Bedrucken von Textilmaterialien, Papier, Leder und zur Bereitung von Tinten.

**15.** Verwendung der Disazoverbindungen der Formel (1) gemäss Anspruch 1 zum Färben und Bedrucken von natürlichen und regenerierten Cellulosematerialien, vor allem Baumwolle und Viscose.

**16.** Verwendung der Disazoverbindungen der Formel (1) gemäss Anspruch 1 zum Färben und Bedrucken von Papier aller Arten, insbesondere zum Färben und Bedrucken von gebleichtem, ungeleimtem, ligninfreiem Papier.

**17.** Verwendung der Disazoverbindungen der Formel (1) gemäss Anspruch 1 zum Färben und Bedrucken von Polyacrylnitrilmaterialien.

**18.** Die mit den Disazoverbindungen der Formel (1) gemäss Anspruch 1 behandelten bzw. gefärbten und bedruckten Materialien.

## Claims

1. A disazo dye of the formula

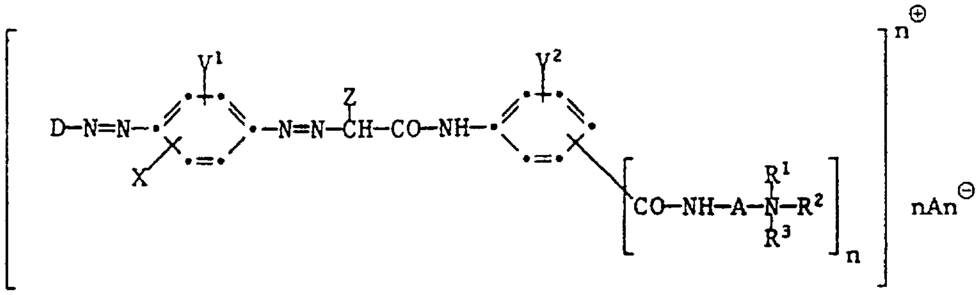

(1)

in which:
D is the radical of a substituted or unsubstituted, homocyclic or heterocyclic diazo component, $V^1$ and $V^2$ independently of one another are hydrogen, substituted or unsubstituted $C_1$-$C_4$alkyl or $C_1$-$C_4$alkoxy, halogen or cyano, X is hydrogen, substituted or unsubstituted $C_1$-$C_4$alkyl or $C_1$-$C_4$alkoxy, halogen, cyano or a group of the formula -NH-CHO, $-NH-CO-NH_2$, -NH-CO-NH-Q or $-NH-CO-(O)_m-Q$ in which m is zero or 1 and Q is substituted or unsubstituted $C_1$-$C_4$alkyl or phenyl, Z is $C_1$-$C_4$alkyl-CO-, -CN, $-COO-C_1$-$C_4$alkyl, $-CONH_2$ or $-CO-C_6H_5$, $R^1$, $R^2$ and $R^3$ independently of one another are in each case a substituted or unsubstituted alkyl radical or $R^1$ and $R^2$, together with the nitrogen atom linking them, or $R^1$, $R^2$ and $R^3$, together with the nitrogen atom linking them, are a heterocyclic radical, A is an alkylene radical having 2 to 6 C atoms, n is 1 or 2 and $An^{\ominus}$ is an anion.

2. A disazo dye according to claim 1, in which D is thienyl, thiazolyl, isothiazolyl, 1,2,4-thiadiazolyl, 1,3,4-thiadiazolyl, benzothiazolyl, benzoisothiazolyl, pyrazolyl, imidazolyl, 1,2,3-triazolyl, 1,2,4-triazolyl, pyridyl or phenyl, these radicals being substituted or unsubstituted.

3. A disazo dye according to claim 2, in which D is phenyl which is unsubstituted or substituted by $C_1$-$C_4$alkyl or $C_1$-$C_4$alkoxy, chlorine or a group of the formula

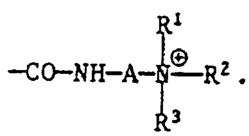

4. A disazo dye according to any one of claims 1-3, in which $R^1$, $R^2$ and $R^3$ independently of one another are in each case methyl, ethyl, n-propyl, isopropyl, n-, sec- or tert-butyl, linear or branched pentyl or hexyl, cyclopentyl or cyclohexyl, it being possible for these radicals to be substituted, for example by hydroxyl, phenyl or alkoxy, or in which $R^1$ and $R^2$, together with the nitrogen atom linking them, form a pyrrolidine, piperidine, morpholine or piperazine radical, or in which $R^1$, $R^2$ and $R^3$, together with the nitrogen atom linking them, form a pyridinium or monoquaternized triethylenediamine radical.

5. A disazo dye according to claim 4, in which $R^1$ is methyl or hydroxyethyl and $R^2$ and $R^3$ independently of one another are in each case $C_1$-$C_3$alkyl, particularly methyl in each case.

6. A disazo dye according to any one of claims 1-5, in which $V^1$ and $V^2$ independently of one another are in each case hydrogen, methyl or methoxy.

7. A disazo dye according to any one of claims 1-6, in which X is hydrogen, methyl, ethyl, methoxy, ethoxy, acetylamino, propionylamino, methoxycarbonylamino, ethoxycarbonylamino or a group of the formula -NH-CHO, $-NH-CO-NH_2$,

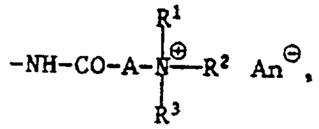

-NH-CO-$R^2$

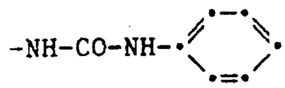

in which A is ethylene, propylene or butylene, $R^1$ is methyl or hydroxyethyl and $R^2$ and $R^3$ independently of one another are in each case $C_1$-$C_3$alkyl.

**8.** A disazo dye according to claim 7, in which X is hydrogen, methyl or methoxy.

**9.** A disazo dye according to any one of claims 1-8, in which Z is -CN, -COO-$C_1$-$C_2$alkyl, -CO-$NH_2$ or -CO-$C_6H_5$ or, in particular, -CO-$CH_3$.

**10.** A disazo dye according to claim 1, in which D is a substituted or unsubstituted benzothiazolyl, pyridyl or phenyl radical, $V^1$ and $V^2$ independently of one another are in each case hydrogen, methyl, ethyl, methoxy or ethoxy, X is hydrogen, methyl, ethyl, methoxy or ethoxy, Z is -CO-$CH_3$, $R^1$ is methyl or hydroxyethyl, $R^2$ and $R^3$ independently of one another are in each case $C_1$-$C_3$alkyl, A is ethylene, propylene or butylene, n is 1 or 2 and $An^{\ominus}$ is an anion.

**11.** A disazo dye of the formula

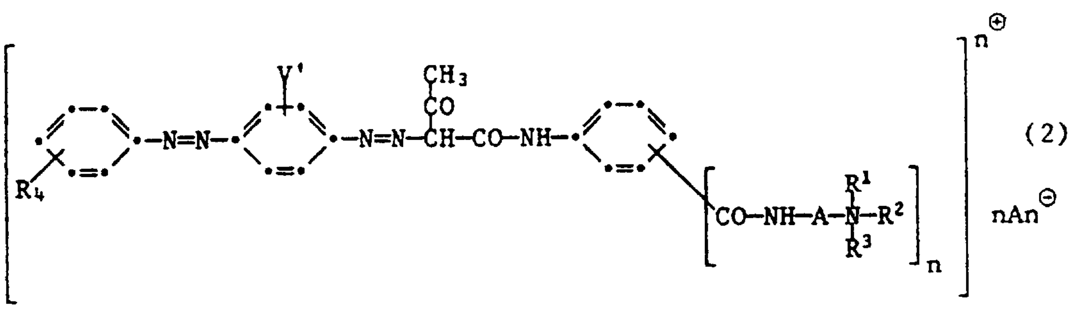

(2)

in which $R^4$ is hydrogen, chlorine, $C_1$-$C_4$alkyl, $C_1$-$C_4$alkoxy or a group of the formula

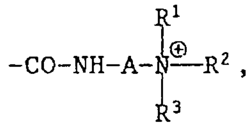

$R^1$ is methyl or hydroxyethyl, $R^2$ and $R^3$ independently of one another are in each case $C_1$-$C_3$alkyl, A is ethylene or propylene, V' is hydrogen, methyl or methoxy, n is 1 or 2 and $An^{\ominus}$ is an anion.

**12.** A process for the preparation of a disazo dye of the formula (1) according to claim 1, which comprises diazotizing an amine of the formula

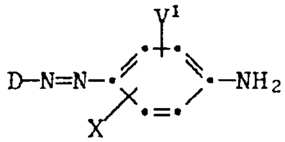

(3)

and coupling the product with a compound of the formula

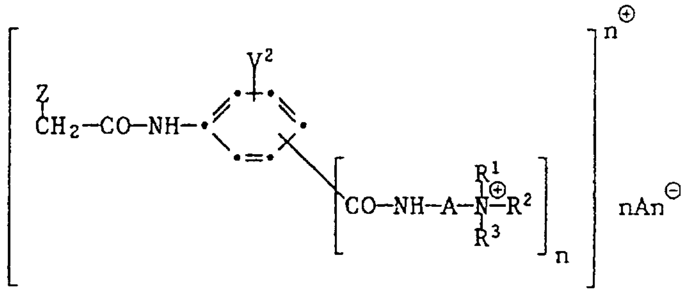

(4)

the meanings indicated in claim 1 applying to D, X, $V^1$, Z, $V^2$, A, $R^1$, $R^2$, $R^3$, n and An.

**13.** A compound of the formula

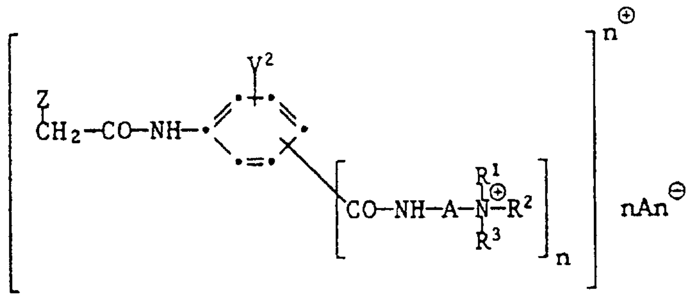

(4)

in which Z, $V^2$, A, $R^1$, $R^2$, $R^3$, n and $An^{\ominus}$ have the meanings indicated in claim 1.

**14.** The use of a disazo compound of the formula (1) according to claim 1, for dyeing and printing textile materials, paper and leather and for the preparation of inks.

**15.** The use of a disazo compound of the formula (1) according to claim 1 for dyeing and printing natural and regenerated cellulose materials, in particular cotton and viscose.

**16.** The use of a disazo compound of the formula (1) according to claim 1 for dyeing and printing paper of all types, in particular for dyeing and printing bleached, unsized, lignin-free paper.

**17.** The use of a disazo compound of the formula (1) according to claim 1 for dyeing and printing polyacrylonitrile materials.

**18.** The materials which have been treated or dyed and printed with a disazo compound of the formula (1) according to claim 1.

## Revendications

**1.** Colorants disazoïques de formule :

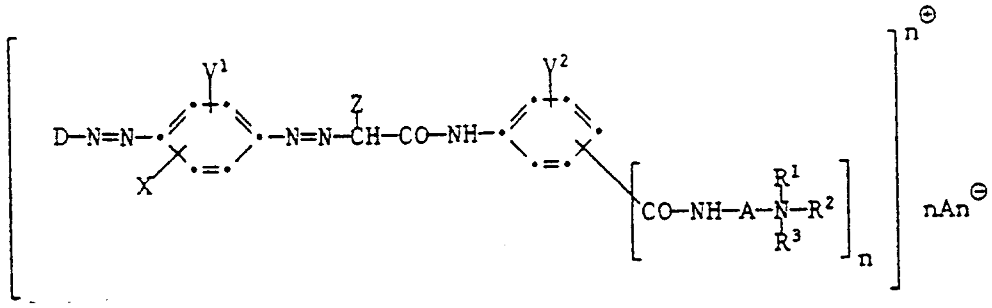

(1)

dans laquelle :

| | |
|---|---|
| D | représente le reste d'un composant diazo hétérocyclique ou homocyclique, éventuellement substitué, |
| $V^1$ et $V^2$ | représentent chacun, indépendamment l'un de l'autre, un atome d'hydrogène ou d'halogène ou un groupe alkyle en $C_1$-$C_4$ ou alcoxy en $C_1$-$C_4$, éventuellement substitué, ou encore un groupe cyano, |
| X | représente un atome d'hydrogène ou d'halogène ou un groupe alkyle en $C_1$-$C_4$ ou alcoxy en $C_1$-$C_4$, éventuellement substitué, ou encore un groupe cyano ou un groupe de formule -NH-CHO, -NH-CO-$NH_2$, -NH-CO-NH-Q ou -NH-CO-$(O)_m$-Q, où m vaut 0 ou 1 et Q représente un groupe alkyle en $C_1$-$C_4$ ou phényle, éventuellement substitué, |
| Z | représente un groupe (alkyl en $C_1$-$C_4$)-CO-, -CN-, -COO-C-(alkyle en $C_1$-$C_4$), -$CONH_2$ ou -CO-$C_6H_5$, |
| $R^1$, $R^2$ et $R^3$ | représentent chacun, indépendamment l'un de l'autre, un groupe alkyle éventuellement substitué, ou bien $R^1$ et $R^2$, conjointement avec l'atome d'azote qui les relie, ou encore $R^1$, $R^2$ et $R^3$, conjointement avec l'atome d'azote qui les relie, forment un groupe hétérocyclique, |
| A | représente un groupe alkylène comportant de 2 à 6 atomes de carbone, |
| n | vaut 1 ou 2, et |
| $An^-$ | représente un anion. |

**2.** Colorants disazoïques conformes à la revendication 1, dans lesquels D représente un reste thiényle, thiazolyle, isothiazolyle, 1,2,4-thiadiazolyle, 1,3,4-thiadiazolyle, benzothiazolyle, benzoisothiazolyle, pyrazolyle, imidazolyle, 1,2,3-triazolyle, 1,2,4-triazolyle, pyridyle ou phényle, ces restes étant éventuellement substitués.

**3.** Colorants disazoïques conformes à la revendication 2, dans lesquels D représente un groupe phényle non substitué ou substitué par des atomes de chlore ou par des groupes alkyle ou alcoxy en $C_1$-$C_4$ ou encore par un groupe de formule :

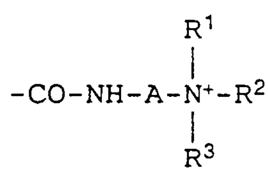

**4.** Colorants disazoïques conformes à l'une des revendications 1 à 3, dans lesquels $R^1$, $R^2$ et $R^3$ représentent chacun, indépendamment l'un de l'autre, un groupe méthyle, éthyle, n-propyle, i-propyle, n-butyle, s-butyle ou t-butyle, ou un groupe pentyle ou hexyle à chaîne droite ou ramifiée, ou encore un groupe cyclopentyle ou cyclohexyle, ces groupes pouvant être substitués, par exemple par des groupes hydroxy, phényle ou alcoxy, ou bien dans lesquels $R^1$ et $R^2$ forment, conjointement avec

l'atome d'azote qui les relie, un reste de pyrrolidine, de pipéridine, de morpholine ou de pipérazine, ou dans lesquels $R^1$, $R^2$ et $R^3$ forment, conjointement avec l'atome d'azote qui les relie, un reste de pyridinium ou de triéthylènediamine monoquaternisé.

**5.** Colorants disazoïques conformes à la revendication 4, dans lesquels $R^1$ représente un groupe méthyle ou hydroxyéthyle et $R^2$ et $R^3$, indépendamment l'un de l'autre, représentent chacun un groupe alkyle en $C_1$-$C_3$, et en particulier chacun un groupe méthyle.

**6.** Colorants disazoïques conformes à l'une des revendications 1 à 5, dans lesquels $V^1$ et $V^2$ représentent chacun, indépendamment l'un de l'autre, un atome d'hydrogène ou un groupe méthyle ou méthoxy.

**7.** Colorants disazoïques conformes à l'une des revendications 1 à 6, dans lesquels X représente un atome d'hydrogène ou un groupe méthyle, éthyle, méthoxy, éthoxy, acétylamino, propionylamino, méthoxycarbonylamino ou éthoxycarbonylamino, ou encore un groupe de formule -NH-CHO, -NH-CO-$NH_2$,

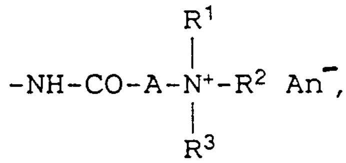

-NH-CO-$R^2$ ou -NH-CO-NH-où A représente un groupe éthylène, propylène ou butylène, $R^1$ représente un groupe méthyle ou hydroxyéthyle et $R^2$ et $R^3$ représentent chacun, indépendamment l'un de l'autre, un groupe alkyle en $C_1$-$C_3$.

**8.** Colorants disazoïques conformes à la revendication 7, dans lesquels X représente un atome d'hydrogène ou un groupe méthyle ou méthoxy.

**9.** Colorants disazoïques conformes à l'une des revendications 1 à 8, dans lesquels Z représente -CN-, -COO-(alkyle en $C_1$-$C_2$), -CO-$NH_2$ ou -CO-$C_6H_5$, ou surtout -CO-$CH_3$.

**10.** Colorants disazoïques conformes à la revendication 1, dans lesquels :

| | |
|---|---|
| D | représente un reste phényle, benzothiazolyle ou pyridyle, éventuellement substitué, |
| $V^1$ et $V^2$ | représentent chacun, indépendamment l'un de l'autre, un atome d'hydrogène ou un groupe méthyle, éthyle, méthoxy ou éthoxy, |
| X | représente un atome d'hydrogène ou un groupe méthyle, éthyle, méthoxy ou éthoxy, |
| Z | représente -CO-$CH_3$, |
| $R^1$ | représente un groupe méthyle ou hydroxyéthyle, |
| $R^2$ et $R^3$ | représentent chacun, indépendamment l'un de l'autre, un groupe alkyle en $C_1$-$C_3$, |
| A | représente un groupe éthylène, propylène ou butylène, |
| n | vaut 1 ou 2, et |
| $An^-$ | représente un anion. |

**11.** Colorants disazoïques de formule :

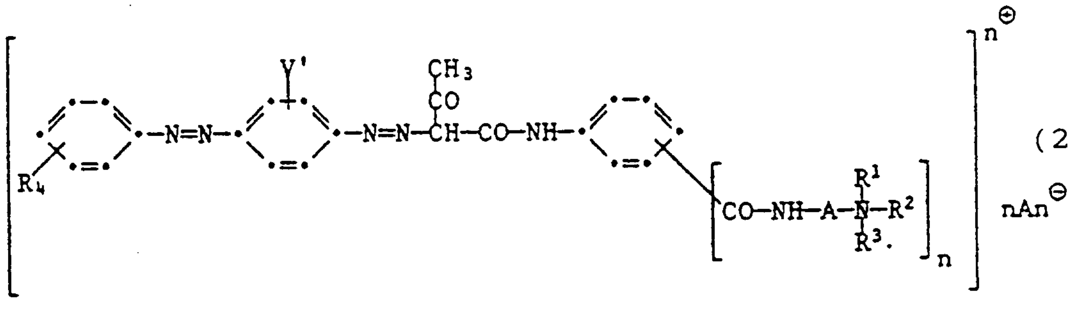

(2)

dans laquelle :

$R^4$ représente un atome d'hydrogène ou de chlore ou un groupe alkyle en $C_1$-$C_4$ ou alcoxy en $C_1$-$C_4$, ou encore un groupe de formule :

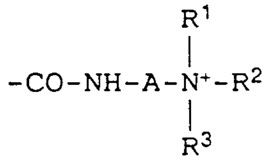

$R^1$ représente un groupe méthyle ou hydroxyéthyle,

$R^2$ et $R^3$ représentent chacun, indépendamment l'un de l'autre, un groupe alkyle en $C_1$-$C_3$,

A représente un groupe éthylène ou propylène,

V' représente un atome d'hydrogène ou un groupe méthyle ou méthoxy,

n vaut 1 ou 2, et

$An^-$ représente un anion.

**12.** Procédé de préparation de colorants disazoïques de formule (1) conformes à la revendication 1, caractérisé en ce que l'on diazote une amine de formule :

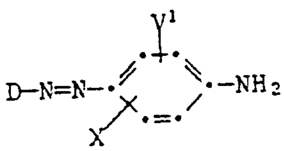

(3)

et qu'on la fait copuler avec un composé de formule :

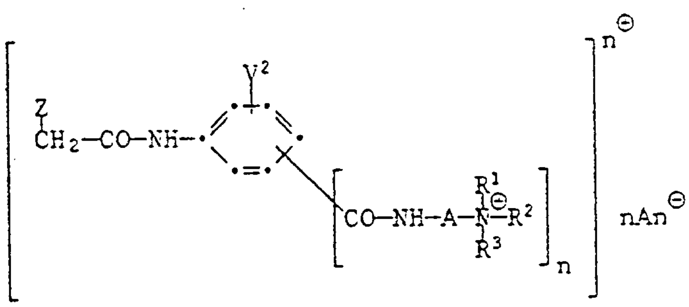

(4)

D, X, $V^1$, Z, $V^2$, A, $R^1$, $R^2$, $R^3$, n et An ayant les significations indiquées dans la revendication 1.

**13.** Composés de formule :

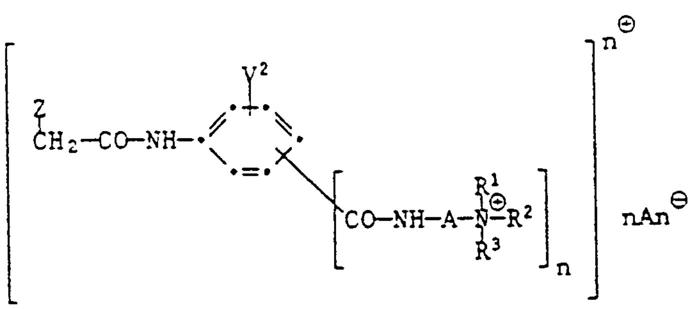

(4)

dans laquelle Z, $V^2$, A, $R^1$, $R^2$, $R^3$, n et An ont les significations indiquées dans la revendication 1.

**14.** Utilisation des composés disazoïques de formule (1) conformes à la revendication 1, pour la teinture et l'impression de matières textiles, de papier ou de cuir ou pour la préparation d'encres.

**15.** Utilisation des composés disazoïques de formule (1) conformes à la revendication 1, pour la teinture et l'impression de matières en cellulose naturelle ou régénérée, et surtout du coton et de la viscose.

**16.** Utilisation des composés disazoïques de formule (1) conformes à la revendication 1, pour la teinture et l'impression de papiers de toutes sortes, en particulier pour la teinture et l'impression de papier blanchi, non encollé et exempt de lignine.

**17.** Utilisation des composés disazoïques de formule (1) conformes à la revendication 1, pour la teinture et l'impression de matières en polyacrylonitrile.

**18.** Matières teintes ou imprimées, traitées avec des composés disazoïques de formule (1) conformes à la revendication 1.